# EUROPEAN PATENT APPLICATION

(11) **EP 4 207 903 A1**
(43) Date of publication of application: **05.07.2023**
(21) Application number: 21868390.2
(22) Date of filing: 19.08.2021
(51) Int. Cl.: H04W 72/04

(54) **COMMUNICATION METHOD AND COMMUNICATION APPARATUS**

(30) Priority: 18.09.2020 CN 202010988609
(71) Applicant: Huawei Technologies Co., Ltd., Shenzhen, Guangdong 518129 (CN)
(72) Inventor: GAO, Xiang, Shenzhen, Guangdong 518129 (CN); XIE, Xinqian, Shenzhen, Guangdong 518129 (CN); GUO, Zhiheng, Shenzhen, Guangdong 518129 (CN)
(74) Representative: Gill Jennings & Every LLP
(86) International application number: PCT/CN2021/113596
(87) International publication number: WO 2022/057562

(57) **Abstract**

This application provides a communication method and a communication apparatus, and relates to the field of communication technologies, to clearly indicate an interference signal, so as to improve accuracy of data demodulation. A terminal device receives first indication information and second indication information from a network device; determines, based on the first indication information and the second indication information, that a first resource in a resource group corresponding to at least one DMRS port in any one of at least one first time unit does not carry a first data signal, and that a second resource in the resource group corresponding to the at least one DMRS port in another time unit in a time unit set other than the at least one first time unit carries the first data signal; and receives the first data signal from the network device on a third resource in all the time units in the time unit set, where the third resource includes the second resource and does not include the first resource.

## Description

### CROSS-REFERENCE TO RELATED APPLICATIONS

This application claims priority to Chinese Patent Application No. 202010988609.X, filed with the China National Intellectual Property Administration on September 18, 2020 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In some service scenarios, a network device uses a same time-frequency resource to transmit data to a plurality of terminal devices, and data transmitted to one of the terminal devices may become an interference signal of the other terminal devices. Therefore, for accurate data demodulation, after receiving data, the terminal device not only needs to perform channel estimation on a transmission channel (or stream) of the data of the terminal device, but also needs to perform channel estimation on a channel (or stream) used to transmit an interference signal, to perform interference cancellation, so as to accurately demodulate the data of the terminal device.

The terminal device may perform channel estimation through a demodulation reference signal (demodulation reference signal, DMRS). For example, in a scenario in which a plurality of slots are scheduled to transmit data, the network device generally transmits the DMRS only in a first slot, and the terminal device may perform data demodulation in the first slot through the received DMRS. However, in another slot after the first slot, there may be an interference signal transmitted by multiplexing a same time-frequency resource, and the interference signal causes interference to data demodulation of the terminal device. In a related technology, a channel estimation result of the first slot is generally reused to demodulate data. However, in practice, a time resource occupied by the interference signal is variable, that is, a DMRS port occupied by another terminal device in a subsequent slot may be different from that in the first slot, so the method of reusing the channel estimation result cannot flexibly match a pairing status, resulting in less accurate data demodulation. Therefore, the problem of low accuracy of data demodulation exists in the related technology.

### SUMMARY

Embodiments of this application provide a communication method and a communication apparatus, to improve accuracy of data demodulation.

According to a first aspect, a communication method is provided. The method may be applied to a terminal device, or may be applied to a chip inside the terminal device. In an example, the method is applied to a terminal device. The terminal device receives first indication information and second indication information from a network device. The first indication information indicates at least one first time unit in a time unit set, the time unit set includes at least two time units, and all time units in the time unit set are for a terminal device to receive a first data signal from the network device. The terminal device determines, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal. Further, the terminal device receives the first data signal from the network device on a third resource in all the time units in the time unit set. The third resource includes the second resource and does not include the first resource.

According to a second aspect, a communication method is provided. The method may be applied to a network device, or may be applied to a chip inside the network device. In an example, the method is applied to a network device. The network device determines first indication information and second indication information. The first indication information indicates at least one first time unit in a time unit set, the time unit set includes at least two time units, all time units in the time unit set are for a terminal device to receive a first data signal from a network device, the second indication information indicates an index of a resource group corresponding to at least one demodulation reference signal DMRS port, and a resource in the resource group corresponding to the at least one DMRS port does not carry a data signal. Then, the network device sends the first indication information and the second indication information to the terminal device, so that the terminal device determines, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal. Further, the network device sends the first data signal to the terminal device on a third resource in all the time units in the time unit set. The third resource includes the second resource and does not include the first resource.

In the solutions of the first aspect and the second aspect, the DMRS port corresponding to the interference signal in each time unit is indicated by a time domain location at which the DMRS is actually sent, that is, a specific feature of the interference signal is described by using each time unit as a dimension, so that the terminal device can accurately determine a specific status of the interference signal in each time unit, and can accurately demodulate the received first data signal, thereby improving effectiveness and reliability of data transmission.

In a possible implementation, the first indication information in the first aspect and the second aspect may indicate: an index, in the time unit set, of a time unit for sending a DMRS corresponding to the at least one DMRS port in each first time unit; or time domain difference information between a time unit for sending a DMRS corresponding to the at least one DMRS port in each first time unit and the first time unit.

In this solution, the DMRS port corresponding to the interference signal in each time unit and the actual time domain location of the sent DMRS can be clearly indicated through the first indication information, so that the terminal device can accurately determine the time domain transmission location of the DMRS and receive each DMRS accurately and timely.

According to a third aspect, a communication method is provided. The method may be applied to a terminal device, or may be applied to a chip inside the terminal device. In an example, the method is applied to a terminal device. The terminal device receives first indication information and second indication information from a network device. The first indication information indicates at least one first time unit in a time unit set, the time unit set includes at least two time units, and all time units in the time unit set are for a terminal device to receive a first data signal from the network device. The terminal device determines, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal. Further, the terminal device receives the first data signal from the network device on a third resource in all the time units in the time unit set. The third resource includes the second resource and does not include the first resource.

According to a fourth aspect, a communication method is provided. The method may be applied to a network device, or may be applied to a chip inside the network device. In an example, the method is applied to a network device. The network device determines first indication information and second indication information. The first indication information indicates at least one first time unit in a time unit set, the time unit set includes at least two time units, all time units in the time unit set are for a terminal device to receive a first data signal from a network device, the second indication information indicates an index of a resource group corresponding to at least one demodulation reference signal DMRS port, and a resource in the resource group corresponding to the at least one DMRS port does not carry a data signal. Then, the network device sends the first indication information and the second indication information to the terminal device, so that the terminal device determines, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal. Further, the network device sends the first data signal to the terminal device on a third resource in all the time units in the time unit set. The third resource includes the second resource and does not include the first resource.

In the solutions in the third aspect and the fourth aspect, the DMRS port corresponding to each interference signal and time domain location information are indicated, and a specific feature of each interference signal is described in a dimension of each interference signal, so that the terminal device can accurately determine a specific status of each interference signal, and can accurately demodulate the received first data signal, thereby improving effectiveness and reliability of data transmission.

In a possible implementation, the first indication information in the third aspect and the fourth aspect indicates: an index of the at least one first time unit in the time unit set; or a time domain start location and a time domain end location of the at least one first time unit in the time unit set; or a time domain start location and time domain duration of the at least one first time unit in the time unit set; or a time domain end location and time domain duration of the at least one first time unit in the time unit set.

In this solution, the time domain location occupied by each interference signal is clearly indicated through the first indication information, so that the terminal device can accurately determine the time domain transmission location of the DMRS and receive each DMRS accurately and timely.

In a possible implementation, the second time unit in the third aspect and the fourth aspect is a time unit that is the first of the at least one first time unit.

In this solution, the DMRS may be transmitted in a time unit in the front (namely, a first time unit), and the terminal device may receive the DMRS as early as possible, so as to perform data demodulation as soon as possible, thereby reducing a data demodulation delay.

In a possible implementation, in the solutions corresponding to the first aspect to the fourth aspect, the first indication information and the second indication information are carried in a same field of DCI; or the first indication information and the second indication information are carried in different fields of DCI; or the first indication information is carried in a MAC-CE, and the second indication information is carried in DCI.

In the foregoing solution, both the first indication information and the second indication information may be carried by a same piece of signaling (namely, DCI). In this case, the first indication information and the second indication information are sent to the terminal device at the same time. Alternatively, the first indication information and the second indication information may be separately carried by different pieces of signaling. In this way, the manner of carrying the first indication information and the second indication information is relatively flexible, and conventional signaling can be reused, thereby improving utilization of existing signaling.

In a possible implementation, in the solutions corresponding to the first aspect to the fourth aspect, a time unit in the time unit set is a slot, and the first resource and the second resource are REs.

According to a fifth aspect, a communication apparatus is provided. The communication apparatus may be a terminal device or a chip disposed in the terminal device. The communication apparatus includes a module configured to perform the method in the first aspect or any one of the possible implementations of the first aspect.

According to a sixth aspect, a communication apparatus is provided. The communication apparatus may be a network device or a chip disposed in the network device. The communication apparatus includes a module configured to perform the method in the second aspect or any one of the possible implementations of the second aspect.

According to a seventh aspect, a communication apparatus is provided. The communication apparatus may be a terminal device or a chip disposed in the terminal device. The communication apparatus includes a module configured to perform the method in the third aspect or any one of the possible implementations of the third aspect.

According to an eighth aspect, a communication apparatus is provided. The communication apparatus may be a network device or a chip disposed in the network device. The communication apparatus includes a module configured to perform the method in the fourth aspect or any one of the possible implementations of the fourth aspect.

According to a ninth aspect, a communication apparatus is provided, including: at least one processor, and a communication interface communicatively connected to the at least one processor, where the at least one processor executes instructions stored in a memory, causing the communication apparatus to perform the method in the first aspect or any one of the possible implementations of the first aspect through the communication interface.

According to a tenth aspect, a communication apparatus is provided, including: at least one processor, and a communication interface communicatively connected to the at least one processor, where the at least one processor executes instructions stored in a memory, causing the communication apparatus to perform the method in the second aspect or any one of the possible implementations of the second aspect through the communication interface.

According to an eleventh aspect, a communication apparatus is provided, including: at least one processor, and a communication interface communicatively connected to the at least one processor, where the at least one processor executes instructions stored in a memory, causing the communication apparatus to perform the method in the third aspect or any one of the possible implementations of the third aspect through the communication interface.

According to a twelfth aspect, a communication apparatus is provided, including: at least one processor, and a communication interface communicatively connected to the at least one processor, where the at least one processor executes instructions stored in a memory, causing the communication apparatus to perform the method in the fourth aspect or any one of the possible implementations of the fourth aspect through the communication interface.

According to a thirteenth aspect, a computer-readable storage medium is provided, including a program or instructions, when the program or the instructions are run on a computer, the method in the first aspect or any one of the possible implementations of the first aspect being performed.

According to a fourteenth aspect, a computer-readable storage medium is provided, including a program or instructions, when the program or the instructions are run on a computer, the method in the second aspect or any one of the possible implementations of the second aspect being performed.

According to a fifteenth aspect, a computer-readable storage medium is provided, including a program or instructions, when the program or the instructions are run on a computer, the method in the third aspect or any one of the possible implementations of the third aspect being performed.

According to a sixteenth aspect, a computer-readable storage medium is provided, including a program or instructions, when the program or the instructions are run on a computer, the method in the fourth aspect or any one of the possible implementations of the fourth aspect being performed.

According to a seventeenth aspect, a chip is provided. The chip is coupled to a memory, and is configured to read and execute program instructions stored in the memory, so that the method in the first aspect or any one of the possible implementations of the first aspect is performed.

According to an eighteenth aspect, a chip is provided. The chip is coupled to a memory, and is configured to read and execute program instructions stored in the memory, so that the method in the second aspect or any one of the possible implementations of the second aspect is performed.

According to a nineteenth aspect, a chip is provided. The chip is coupled to a memory, and is configured to read and execute program instructions stored in the memory, so that the method in the third aspect or any one of the possible implementations of the third aspect is performed.

According to a twentieth aspect, a chip is provided. The chip is coupled to a memory, and is configured to read and execute program instructions stored in the memory, so that the method in the fourth aspect or any one of the possible implementations of the fourth aspect is performed.

According to a twenty-first aspect, a computer program product is provided, including instructions. When the instructions are run on a computer, the method in the first aspect or any one of the possible implementations of the first aspect is performed.

According to a twenty-second aspect, a computer program product is provided, including instructions. When the instructions are run on a computer, the method in the second aspect or any one of the possible implementations of the second aspect is performed.

According to a twenty-third aspect, a computer program product is provided, including instructions. When the instructions are run on a computer, the method in the third aspect or any one of the possible implementations of the third aspect is performed.

According to a twenty-fourth aspect, a computer program product is provided, including instructions. When the instructions are run on a computer, the method in the fourth aspect or any one of the possible implementations of the fourth aspect is performed.

It should be understood that the foregoing general descriptions and the following detailed descriptions are merely illustrative and explanatory, and are not intended to limit this disclosure.

### BRIEF DESCRIPTION OF DRAWINGS

FIG. 1 is a schematic diagram of an application scenario according to an embodiment of this application;
FIG. 2 is a schematic diagram of a MIMO system;
FIG. 3a is a schematic diagram of a time domain resource of a type1 single-symbol DMRS;
FIG. 3b is a schematic diagram of a time domain resource of a type1 double-symbol DMRS;
FIG. 4 is a schematic diagram of data transmission of two UEs by scheduling a plurality of consecutive slots;
FIG. 5 is a flowchart of a communication method according to an embodiment of this application;
FIG. 6 is a schematic diagram of a plurality of interference modes according to an embodiment of this application;
FIG. 7 is an interaction flowchart of a communication method according to an embodiment of this application;
FIG. 8 is another flowchart of a communication method according to an embodiment of this application;
FIG. 9 is another interaction flowchart of a communication method according to an embodiment of this application;
FIG. 10 is a schematic diagram depicting a structure of a communication apparatus according to an embodiment of this application;
FIG. 11 is a schematic diagram depicting a structure of another communication apparatus according to an embodiment of this application;
FIG. 12 is a schematic diagram depicting a structure of another communication apparatus according to an embodiment of this application;
FIG. 13 is a schematic diagram depicting a structure of another communication apparatus according to an embodiment of this application;
FIG. 14 is a schematic diagram depicting a structure of another communication apparatus according to an embodiment of this application; and
FIG. 15 is a schematic diagram depicting a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.
(1) A terminal device includes a device that provides a user with voice and/or data connectivity, for example, may include a handheld device with a wireless connection function or a processing device connected to a wireless modem. The terminal device may communicate with a core network through a radio access network (radio access network, RAN), and exchange voice and/or data with the RAN. The terminal device may include user equipment (user equipment, UE), a terminal, a wireless terminal device, a mobile terminal device, a device-to-device (device-to-device, D2D) communication terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

(2) A network device includes, for example, an access network (access network, AN) device such as a base station (for example, an access point), and may be a device that communicates with a wireless terminal device over an air interface through one or more cells in an access network. Alternatively, for example, an access network device in a V2X technology is a road side unit (road side unit, RSU). The base station may be configured to mutually convert a received over-the-air frame and an internet protocol (IP) packet, and serve as a router between the terminal device and a remaining part of the access network. The remaining part of the access network may include an IP network. The RSU may be a fixed infrastructure entity supporting a V2X application, and may exchange a message with another entity supporting the V2X application. The access network device may further coordinate attribute management of the air interface. For example, the access network device may include an evolved NodeB (NodeB, eNB, or e-NodeB, evolved NodeB) in a long term evolution (long term evolution, LTE) system or a long term evolution-advanced (long term evolution-advanced, LTE-A) system, or may include a next generation NodeB (next generation NodeB, gNB) and a next generation evolved NodeB (next generation evolved NodeB, ng-eNB) in a new radio (new radio, NR) system of the 5th generation (the 5th generation, 5G) mobile communication technology or may include a central unit (central unit, CU) and a distributed unit (distributed unit, DU) in a separated access network system. This is not limited in embodiments of this application.

Certainly, the network device may further include a core network device, which may have an access and mobility management function (access and mobility management function, AMF), and is mainly responsible for functions such as access control, mobility management, attach and detach, and gateway selection. The core network device may also have a network data analytics function (network data analytics function, NWDAF), and is mainly responsible for functions such as data collection and analysis. The core network device may alternatively be another device.

(3) "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely intended to distinguish between different pieces of signaling, but do not indicate that the two types of information are different in content, priorities, a sending sequence, importance, or the like.

(4) A time unit involved in this application may be a slot (slot), a mini-slot (mini-slot), a transmission time interval (transmission time interval, TTI), a subframe, a symbol, or the like.

The foregoing describes some concepts in embodiments of this application, and the following describes technical characteristics in embodiments of this application.

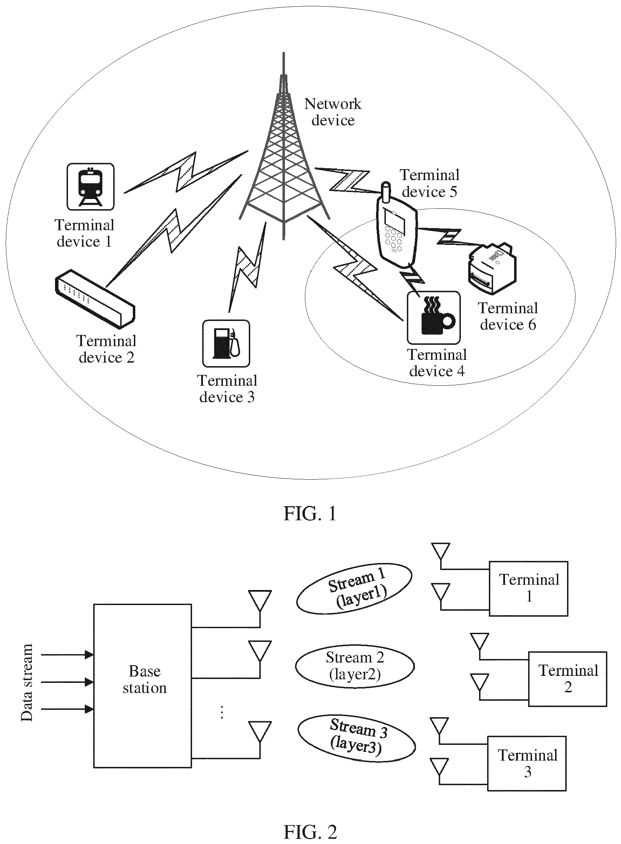

The following describes a network architecture to which an embodiment of this application is applied. Refer to FIG. 1.

FIG. 1 includes a network device and a plurality of terminal devices. The network device and the terminal devices 1 to 6 form a communication system. In the communication system, the network device may send information to each terminal device. Correspondingly, each terminal device may also send information to the network device. In addition, the terminal devices 4 to 6 may also form a communication system. In the communication system, the terminal device 5 may send information to either or both of the terminal device 4 and the terminal device 6. These terminal devices in the communication system shown in FIG. 1 may include, for example, devices such as a mobile phone, a television, a gas station device, a printer, a car, a refrigerator, and an air conditioner. These terminal devices may be terminal devices in an LTE system, or may be terminal devices in a 5G NR system.

The communication system shown in FIG. 1 supports multiple-input multiple-output (multiple-input multiple-output, MIMO) transmission. For example, the network device may pair the terminal device 1 and the terminal device 5, so that the terminal device 1 and the terminal device 5 are paired users. The network device may transmit data to the two terminal devices by using a same time-frequency resource. In this way, on the same time-frequency resource, a data signal transmitted by one of the terminal devices may become an interference signal of the other of the terminal devices. For the terminal device 1, a data signal transmitted by the network device to the terminal device 5 on a same time-frequency resource becomes interference of the terminal device 1 when receiving the data signal on the time-frequency resource. Therefore, when receiving the data signal sent by the network device, the terminal device 1 actually further includes data sent by the network device to the terminal device 5. To accurately demodulate data, the terminal device 1 not only needs to perform channel estimation on the terminal device 1, but also needs to perform channel estimation on the terminal device 5.

A communication system involved in embodiments of this application may be, for example, a long term evolution (long term evolution, LTE) system, a 5th generation communication system (5th generation mobile networks or 5th generation wireless systems, 5G), or a hybrid architecture of LTE and 5G.

The technical solutions provided in embodiments of this application may be applied to a service scenario of wireless to the X (wireless to the X, WTTx), and may support large-packet transmission (high throughput) by relying on a wireless technology in 4G LTE or 5G NR. In this service scenario, compared with a network device (for example, a base station), a location of a terminal (for example, a customer premise equipment (customer premise equipment, CPE), which can receive a mobile signal and forward the mobile signal by a wireless-fidelity (wireless-fidelity, Wi-Fi) signal) basically remains unchanged. Related field measurement and research also indicate that a radio channel between the base station and the terminal basically remains unchanged within a period of time, that is, has a quasi-static feature. Therefore, downlink single-user transmission is used as an example. In a set of consecutive slots, the base station may send only one physical downlink control channel (physical downlink control channel, PDCCH) carrying downlink control information (downlink control information, DCI) to continuously schedule a plurality of transmission blocks (transmission block, TB), and send a DMRS only in a first downlink slot. A channel estimation result of the first slot is reused for the remaining slots, so that overheads are reduced, and more time-frequency resources are used for downlink data transmission.

In a MIMO system, a plurality of transmitting antennas and receiving antennas are configured at a transmit end and a receive end, which is equivalent to increasing available channel resources in a spatial dimension. Therefore, a system capacity can be multiplied without increasing spectrum resources and antenna transmit power. Therefore, since 4G LTE, the MIMO technology is considered as a key technology for improving system performance. The MIMO technology can support different users to send or receive data on a same time-frequency resource, in other words, can support different users to reuse the same time-frequency resource to send and receive data, thereby improving a total uplink and downlink transmission rate. Users who reuse the same time-frequency resource (REs on a same orthogonal frequency division multiplexing (orthogonal frequency division multiplexing, OFDM) symbol) may also be referred to as paired users (co-scheduled UE). These users transmit data in parallel on different spatial domain resources (streams and layers). Data on different streams is mapped to different antenna ports for transmission according to a mapping relationship agreed between a base station and a terminal. The MIMO system that simultaneously serves a plurality of users is referred to as multi-user MIMO (MU-MIMO), as shown in FIG. 2.

The following describes a DMRS port in NR.

There are two types of NR DMRSs: a front-loaded DMRS (front loaded DMRS) and an additional DMRS (additional DMRS) (also referred to as an additional DMRS). The following provides descriptions.

### 1. Front-loaded DMRS.

To reduce demodulation and decoding delays, a front-loaded design is used for a DMRS of a data channel (physical downlink shared channel (physical downlink shared channel, PDSCH)/physical uplink shared channel (physical uplink shared channel, PUSCH)) in an NR system. In each scheduling time unit (for example, each slot), a location at which the DMRS first appears should be as close as possible to a scheduling start point. For example, in slot-based scheduling transmission, a location of the front-loaded DMRS is adjacent to a PDCCH area and after the PDCCH area. In this case, a specific location of a first symbol of the front-loaded DMRS depends on a configuration of the PDCCH, and may be a third or fourth symbol. During mini-slot scheduling transmission, the front-loaded DMRS starts to be transmitted from the first symbol of the scheduling area. The use of the front-loaded DMRS helps a receive end to start channel estimation and receive detection as early as possible, and plays an important role in reducing a delay and supporting a self-contained frame structure.

DMRS ports are multiplexed in a frequency division multiplexing (frequency-division multiplexing, FDM) + code division multiplexing (code division multiplexing, CDM) manner. Each CDM group is divided into a plurality of ports through an orthogonal cover code (orthogonal cover code, OCC), and CDM groups are distinguished in an FDM manner.

NR supports two DMRS types (type), and a used DMRS type is configured through higher layer signaling. The NR DMRS may include one (that is, a single-symbol DMRS) or two (that is, a double-symbol DMRS) OFDM symbols. Multiplexing and configuration manners of the two DMRS types are specifically described as follows.

### (1) A DMRS type 1, namely, a DMRS type1.

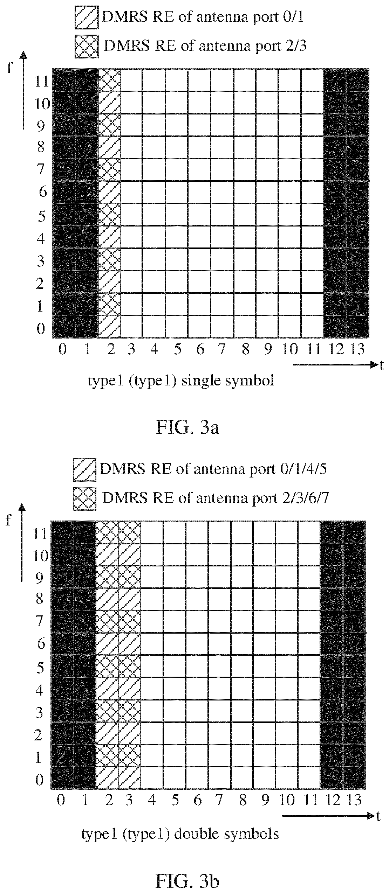

FIG. 3a shows port mapping of a DMRS of type1 with a single symbol. For a single-symbol DMRS, subcarriers in one OFDM symbol are divided into two groups of frequency-division comb resources, and each group of comb resources forms one CDM group. The CDM group supports multiplexing of two ports through two OCCs, and at most four ports are supported, for example, ports 0, 1, 2, and 3 (or ports 1000, 1001, 1002, and 1003).

Further, FIG. 3b shows port mapping of a DMRS of type1 with double symbols. Based on the single-symbol structure, a time-domain OCC (Time Domain OCC, TD-OCC) is added in the double-symbol DMRS. Each group of comb resources occupies two consecutive OFDM symbols. Each CDM group implements four orthogonal ports through four OCCs in the time-frequency domain. Therefore, at most eight orthogonal ports are supported.

### (2) A DMRS type 2, namely, a DMRS type 2.

For a type2 single-symbol DMRS, subcarriers in an OFDM symbol are divided into three CDM groups, and each CDM group consists of two pairs of adjacent subcarriers. The CDM group supports multiplexing of two ports through two OCCs, and the CDM groups are distinguished in an FDM manner. Therefore, at most six ports are supported.

For a type2 double-symbol DMRS, a TD-OCC is added based on a structure of the type2 single-symbol DMRS. Each CDM group occupies two consecutive OFDM symbols. Each CDM group supports four orthogonal ports through four OCCs in the time-frequency domain. Three CDM groups support at most 12 ports.

In summary, for a type1 DMRS, a single symbol supports at most four antenna ports, and double symbols support at most eight antenna ports; and for a type2 DMRS, a single symbol supports at most six antenna ports, and double symbols support at most 12 antenna ports.

### 2. Additional DMRS.

In high-speed mobility scenarios, in addition to the DMRS, more DMRS symbols need to be inserted in scheduling duration to ensure the accuracy of time-varying channel estimation. In an NR system, a structure in which a front-loaded DMRS is combined with an additional DMRS whose time domain density is configurable is used. A pattern of each group of additional DMRSs is a repetition of the front-loaded DMRS. Therefore, consistent with the front-loaded DMRS, each group of additional DMRSs may occupy at most two consecutive OFDM symbols. At most three groups of additional DMRSs may be configured based on a specific application scenario and mobility. The quantity of additional DMRSs depends on a higher-layer parameter configuration and specific scheduling duration.

For ease of understanding, the following first describes interference cancellation in a related technology.

In an LTE downlink interference cancellation mechanism, a base station may notify, through DCI, a terminal device of information such as an antenna port occupied by an interference signal, and a quantity of streams, to assist the terminal in performing interference measurement and cancellation on a scheduled time-frequency resource.

Similarly, in NR, the base station may notify, through an antenna port field in the DCI, the terminal of:
1. ports occupied by DMRSs sent to a PDSCH of the terminal; and
2. RE locations that do not carry downlink data.

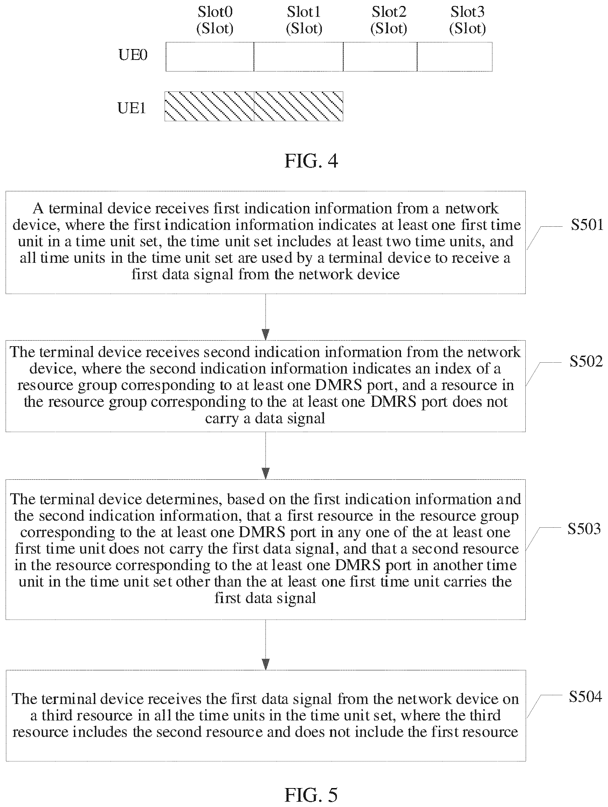

In some service scenarios (for example, a WTTx service), a network device schedules a plurality of TBs in a set of consecutive slots. For example, as shown in FIG. 4, the network device schedules a downlink service of four slots long (that is, slot0 to slot3) for UE0, and pairs UE1 with the UE0. Therefore, the UE0 and the UE1 may be referred to as paired users. The network device schedules a downlink service of two slots long (that is, slot0 and slot1) for the UE1. The network device sends, in slot0 to the UE0, a DMRS for the UE0 to perform channel estimation, and notifies, through DCI, the UE0 of a port used to receive the DMRS. After receiving the DCI, the UE0 may determine to receive, in slot0, the DMRS used for channel estimation of the UE0. In addition, because the DMRS is broadcast, the UE0 may further receive a DMRS that occupies another DMRS port and is used for channel estimation of the UE1. In this way, after receiving all DMRSs sent by the network device, the UE0 can perform channel estimation on a channel carrying downlink data sent to this UE (a stream occupied by the channel is the same as a stream corresponding to the DMRS port occupied by this LJE) and a channel carrying downlink data sent to the paired UE (a stream occupied by the channel is the same as a stream corresponding to the DMRS port occupied by the paired UE, and is different from that of the DMRS port occupied by this UE), so as to accurately demodulate the downlink data sent to this LJE.

In the foregoing service scenario, for interference, that may exist in subsequent slots (that is, slot1 to slot3), caused by the downlink data of the paired user to demodulation of the downlink data of this user, in one manner, the UE0 reuses an estimation result of a corresponding channel on a DMRS port occupied by the UE0 + interference in slot0 to perform data demodulation. However, in practice, a time resource occupied by the paired UE is variable, that is, a DMRS port occupied by the paired UE in the subsequent slot may be different from that in slot0, so the method of reusing the channel estimation result cannot flexibly match a pairing status. In some cases, a DMRS port occupied by the paired user in some slots is vacant in the subsequent slot, and an RE corresponding to the DMRS port could have carried downlink data sent to the UE0, causing resource waste.

To further describe the technical solutions provided in embodiments of this application, the following describes the technical solutions in detail with reference to the accompanying drawings and specific implementations. Although embodiments of this application provide operation steps of methods shown in the following embodiments or accompanying drawings, the methods may include more or fewer operation steps based on conventional or no creative effort. In steps that logically have no necessary causal relationship, an order of performing these steps is not limited to the order of performing these steps provided in embodiments of this application. When the method is actually processed or performed by an apparatus, the method may be performed in an order of the method shown in the embodiments or the accompanying drawings, or may be performed in parallel.

The technical solutions provided in embodiments of this application are described below with reference to the accompanying drawings.

FIG. 5 is a flowchart of a communication method according to an embodiment of this application. For example, the communication method may be performed by a terminal device. The process shown in FIG. 5 is described as follows.

Step 501: A terminal device receives first indication information from a network device, where the first indication information indicates at least one first time unit in a time unit set, the time unit set includes at least two time units, and all time units in the time unit set are for the terminal device to receive a first data signal from the network device.

As described above, the network device may schedule a plurality of consecutive TBs for the terminal device through a consecutive time unit set, for example, may schedule a plurality of TBs for transmission through consecutive slots. Therefore, the terminal device may receive, in each time unit in the time unit set, data sent by the network device. In other words, all time units in the time unit set are for the terminal device to receive data from the network device. For example, the data received by the terminal device from the network device is referred to as a first data signal.

The time unit set in this embodiment of this application includes at least two time units. For example, the time unit set includes slot0, slot1, slot2, and slot3 shown in FIG. 4. In other words, the time unit set includes four consecutive slots.

In this embodiment of this application, the first indication information indicates at least one first time unit in the time unit set. A time unit in the time unit set indicated by the first indication information is referred to as a first time unit. Therefore, any first time unit indicated by the first indication information is a time unit in the time unit set. The at least one first time unit may be one or more time units in the time unit set, and the at least one first time unit may be all or some time units in the time unit set. This is not limited in embodiments of this application.

Step 502: The terminal device receives second indication information from the network device, where the second indication information indicates an index of a resource group corresponding to at least one DMRS port, and a resource in the resource group corresponding to the at least one DMRS port does not carry a data signal.

Because the resource in the resource group corresponding to the at least one DMRS port does not carry the data signal, the resource group that is corresponding to the at least one DMRS port and that is indicated by the second indication information is, for example, CDM Group without data, including one or more of CDMO, CDM1, and CDM2. Correspondingly, the index of the resource group is, for example, at least one of 1, 2, and 3. When the index of the resource group is 1, the resource group corresponds to CDM0. When the index of the resource group is 2, the resource group corresponds to CDM0 and CDM1. When the index of the resource group is 3, the resource group corresponds to CDMO, CDM1, and CDM2.

The resource group corresponding to the DMRS port does not carry the data signal, that is, the resource included in the resource group does not carry the data signal. It may be understood that the resource group that does not carry the data signal may carry a DMRS signal. Therefore, the resource group that is corresponding to the DMRS port and that does not carry the data signal may be understood as a resource group that may carry the DMRS. In other words, the resource group that is corresponding to the at least one DMRS port and that is indicated by the second indication information may carry the DMRS. For example, the resource group may carry the DMRS used for channel estimation of the terminal device, and may also carry a DMRS used for channel estimation of another terminal device (for example, another terminal device paired with the terminal device).

Step 503: The terminal device determines, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal.

According to indication of the first indication information and the second indication information, the terminal device may determine that the first resource in the resource group corresponding to the at least one DMRS port in any one of the at least one first time unit (that is, each first time unit) does not carry the first data signal. In other words, a resource that does not carry the first data signal and that is in a CDM group corresponding to a DMRS port in each first time unit may be determined. For ease of understanding, in this embodiment of this application, the resource that is in the CDM group corresponding to the DMRS port in the first time unit and that does not carry the first data signal is referred to as a "first resource", and not carrying data may be implicitly understood as carrying the DMRS, that is, the first resource may carry the DMRS. A resource in the CDM group is, for example, an RE. Different indexes of the CDM group represent different REs. In other words, the network device clearly notifies the terminal device of a time domain resource (namely, a time unit) and a frequency domain resource (namely, an RE) used to receive the DMRS. In this case, the terminal device may determine, according to the indication of the first indication information and the second indication information, time-frequency resources on which the DMRS is received. The DMRS received by the terminal device on these time-frequency resources includes a DMRS used for channel estimation of the terminal device, and may further include a DMRS used for channel estimation of another terminal device (for example, a paired terminal).

Refer to the configuration of the antenna port field in the DCI corresponding to the type1 single-symbol DMRS shown in Table 1. In this case, the antenna port field includes 4 bits, and therefore, a value of the bit field of the antenna port field is 0 to 15.

**Table 1**

| One codeword (the codeword 0 is enabled, and the codeword 1 is disabled) | | |
|---|---|---|
| Bit field value | CDM group without data | DMRS port |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

When a value of the antenna port field is 0, an index of a corresponding CDM group in the CDM group without data is 1. Because the CDM group whose index is 1 is the CDMO, it indicates that an RE resource included in the CDM0 does not carry data. In other words, it may be understood that the RE resource included in the CDM0 may be used to transmit the DMRS. In addition, because the antenna ports 1000 and 1001 match and correspond to the CDMO, the antenna ports 1002 and 1003 match and correspond to the CDM1, and the third column (namely, the DMRS port) in Table 1 indicates that the antenna port of the DMRS for the terminal device to perform channel estimation of the terminal device is 1000, the terminal device may infer that only the DMRS port 1001 has a DMRS that may have an interference signal.

That is, the frequency domain resource used to transmit the DMRS in each time unit may be indicated by using a time unit as a dimension through the second indication information. In this way, the terminal device may determine, according to the indication of the first indication information and the second indication information, the frequency domain resource used to transmit the DMRS in each first time unit. In all the DMRSs received by the terminal device in all the first time units, except the DMRS used for channel estimation of the terminal device, the other DMRSs may be considered as DMRSs corresponding to the interference signal. Further, a DMRS port corresponding to each interference signal may be determined according to Table 1 above.

In addition, the terminal device may further determine that the second resource in the resource group corresponding to the at least one DMRS port in another time unit in the time unit set other than the at least one first time unit carries the first data signal, that is, may determine time-frequency resources on which the data sent by the network device is received. For ease of understanding, in this embodiment of this application, the data received by the terminal device from the network device is referred to as the first data signal. If there is no interference, the first data signal includes only a data signal sent by the network device to the terminal device. However, if there is an interference, the first data signal not only includes a data signal sent by the network device to the terminal device, but also includes an interference signal. The interference signal is, for example, a data signal sent by the network device to another terminal device on a same time-frequency resource (that is, a time-frequency resource on which the network device sends the data signal to the terminal device).

To be specific, according to the indication of the first indication information and the second indication information, the terminal device may learn that the DMRS is received on a frequency domain resource (for example, an RE) corresponding to each time unit (namely, a time domain resource). The received DMRS is used to estimate a channel carrying downlink data of the terminal device. If there is an interference, a plurality of DMRSs may be received. In addition to the DMRS for the terminal device to perform channel estimation of the terminal device, the other DMRSs are for the terminal device to estimate a channel on another stream, that is, channel estimation may be performed on a stream for transmitting an interference signal. In other words, a DMRS port and a frequency domain resource corresponding to an interference signal (if any) in each time unit may be indicated to the terminal device. The terminal device may determine time units in which the DMRS exists, and may determine frequency domain resources and DMRS ports on which the DMRS is received when the DMRS exists in a time unit. In this way, a related feature of the interference signal in each time unit is clearly indicated to the terminal device.

Step 504: The terminal device receives the first data signal from the network device on a third resource in all the time units in the time unit set, where the third resource includes the second resource and does not include the first resource.

In the related technology, a DMRS for a terminal device to perform channel estimation in a time unit is generally received in the time unit. If there is an interference, a DMRS used to perform channel estimation for an interference signal may also be received in the time unit. However, in an actual interference scenario, the DMRS used to perform channel estimation for the interference signal is usually not sent in the time unit. Therefore, to improve accuracy of interference channel estimation, this embodiment of this application provides a solution to perform indication in each time unit, specifically, indicating that a DMRS used for channel estimation in a current time unit is from another time unit. In other words, the DMRS used for channel estimation in the time unit is transmitted in another time unit, and the DMRS transmitted in another time unit is a DMRS corresponding to the interference signal. Therefore, a frequency domain resource (for example, an RE) of the DMRS corresponding to the interference signal in each time unit may be determined according to the indication of the first indication information and the second indication information.

According to the indication of the first indication information and the second indication information, the terminal device determines the time-frequency resource used to receive the DMRS and the time-frequency resource used to receive the first data signal. For example, the terminal device receives, on the third resource, the first data signal sent by the network device. Because the RE used to transmit the DMRS cannot be used to transmit the data signal, and as described in the step 503, the resource for the terminal device to receive the data signal is the third resource, the third resource that is finally actually for the terminal device to receive the first data signal includes the second resource and does not include the first resource. In other words, the third resource belongs to the second resource and does not belong to the first resource.

In an actual transmission scenario, the first data signal received by the terminal device may or may not be interfered with. If there is an interference, interference cancellation needs to be performed to implement accurate data demodulation.

The DMRS may be received on the first resource in each first time unit determined above. For the received DMRS, in addition to the DMRS for the terminal device for channel estimation of the terminal device, if the received DMRS further includes another DMRS, the another DMRS may be understood as a DMRS corresponding to an interference signal. For ease of description, for example, the DMRS for the terminal device for channel estimation of the terminal device is referred to as a first DMRS, and the DMRS corresponding to the interference signal is referred to as a second DMRS. Therefore, in addition to the first DMRS, if the received DMRS further includes the second DMRS, it may be inferred that there is an interference in the first data signal received by the terminal device, and a quantity of interference signals may be correspondingly determined based on a quantity of included second DMRSs, that is, the quantity of second DMRSs is equal to the quantity of interference signals.

In this way, the terminal device may not only receive the first data signal on the third resource, but also receive the first DMRS and the second DMRS (if there is an interference signal) on the first resource in each first time unit. Further, after receiving, on the third resource, the first data signal sent by the network device, the terminal device may perform, through the first DMRS used for channel estimation of the terminal device, channel estimation on a channel of the terminal device, and perform, through the second DMRS, channel estimation on a channel on which an interference signal is sent, and may perform interference cancellation on the first data signal based on channel estimation results of the first DMRS and the second DMRS, to implement accurate data demodulation, to obtain data actually to be sent by the network device to the terminal device.

In this embodiment of this application, the first indication information indicates at least one first time unit in the time unit set. The terminal device may determine, based on the first indication information, a first resource that is in any first time unit and that does not carry the first data signal, that is, may determine a frequency domain resource for the terminal device to receive the DMRS. In other words, the network device transmits the DMRS to the terminal device in the first time unit in the time unit set, and indicates, through the second indication information, a frequency domain resource (for example, an RE resource) used to transmit the DMRS to the terminal device. In this embodiment of this application, there is a resource used to transmit the DMRS of the interference signal in the resource corresponding to the CDM group in the first time unit indicated by the first indication information. In this manner, the network device may indicate, through the first indication information, the DMRS port of each interference signal to the terminal device, so that the terminal device can accurately receive the DMRS of each interference signal on the corresponding resource, thereby achieving accurate interference cancellation and improving effectiveness and reliability of data transmission.

In a specific implementation, the first indication information may indicate an index, in the time unit set, of a time unit for sending a DMRS corresponding to the at least one DMRS port in each first time unit. In this way, an actual time domain location for sending the DMRS corresponding to the at least one DMRS port in each first time unit can be clearly known, so that the terminal device can accurately receive the DMRS.

In another possible implementation, the first indication information may indicate time domain difference information between a time unit for sending a DMRS corresponding to the at least one DMRS port in each first time unit and the first time unit. For example, a first time unit is slot2. The first indication information may indicate time domain difference information between slot2 and the time unit for actually sending the DMRS corresponding to the at least one DMRS port in slot2. The time domain difference information includes time domain interval length information, and the time domain interval length information may indicate a quantity of time units between two time units. For example, if the time domain difference information indicates that the quantity of time units between two time units is 1, it may be inferred that a time unit actually for sending a DMRS is slot1, that is, a previous slot adjacent to slot2. Because the time unit actually for sending the DMRS is generally earlier than a time unit indicating a DMRS port corresponding to the DMRS, it can be inferred that the time unit actually for sending the DMRS is before the time unit indicating the DMRS port corresponding to the DMRS. In a specific implementation, the time unit for actually sending the DMRS and the time unit for indicating the DMRS port corresponding to the DMRS may be a same time unit, then the quantity of time units between two time units indicated by the time domain difference information is 0. In this case, the terminal device may not only receive, in one time unit, a DMRS used for channel estimation of the terminal device, but also receive, in the time unit, a DMRS used for channel estimation of a stream of an interference signal.

In other words, actual time domain location information for sending a DMRS signal may be further indicated by the first indication information. In this way, the terminal device can accurately and quickly receive the DMRS signal at the corresponding time domain location, thereby improving accuracy of data demodulation, and further improving efficiency of data demodulation.

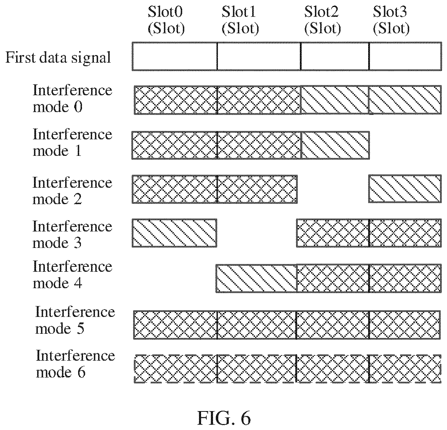

The DMRS configuration in Table 1 is used as an example. Refer to some possible interference cases corresponding to the first data signal scheduled in four consecutive slots shown in FIG. 6. For example, each interference case is referred to as an interference mode, and a DMRS port of a possible interference signal + an actual time-domain sending location of a DMRS are shown in Table 2.

**Table 2**

| Index value | Interference mode |
|---|---|
| 0 | Without interference |
| 1 | The interference is from a port 1, and the DMRS is sent in this slot |
| 2 | The interference is from a port 1, and the DMRS is sent in a previous slot |
| 3 | Reserved |

Based on the foregoing analysis, time units in the time unit set other than the first time unit may be referred to as other time units. In other words, the time unit set consists of the first time unit and other time units. The first time unit may indicate a DMRS port of an existing interference signal. In a specific implementation, the following cases may be included.

Case 1. All time units in the time unit set are the first time units, that is, there is an interference signal in each time unit in the time unit set. In this case, other time units are an empty set, as an interference mode 0 and an interference mode 5 shown in FIG. 6. In the interference mode 0, two interference signals are included, one interference signal occupies slots slot0 and slot1, and the other interference signal occupies slots slot2 and slot3. In the interference mode 5, one interference signal is included, and the interference signal occupies four consecutive slots.

Case 2. Some time units in the time unit set are the first time units, that is, there are interference signals only in some time units in the time unit set. In this case, other time units and the first time units are not empty sets, as an interference mode 1, an interference mode 2, an interference mode 3, and an interference mode 4 shown in the figure. Using the interference mode 2 as an example, two interference signals are included, one interference signal occupies slots slot0 and slot1, and the other interference signal occupies only slot3. It can be learned that there is no interference in slot2.

Case 3. The time unit set does not include the first time unit, that is, there is no interference in the time unit set. In this case, the first time unit is an empty set, and other time units are all time units in the time unit set, as an interference mode 6 in FIG. 6. In the interference mode 6 in FIG. 6, a dashed line indicates that there is no interference in a slot corresponding to the dashed line, that is, there is no interference in the entire slot set. This may correspond to an SU-MIMO service scenario.

In a specific implementation, the first indication information and the second indication information may be carried in a same field in the DCI, for example, both are carried in an antenna port field in the DCI, and different interference modes in Table 2 may be indicated by different values of the antenna port field. Alternatively, the first indication information and the second indication information may be carried in different fields in the DCI. For example, the second indication information is carried in the antenna port field in the DCI, and the first indication information is carried in another field in the DCI. Alternatively, the first indication information and the second indication information may be carried through different pieces of signaling. For example, the first indication information is carried through a MAC-CE, and the second indication information is carried through DCI. In this way, the existing signaling and some fields in the existing signaling are reused, so that a specific feature of each interference signal can be clearly indicated to the terminal device, thereby improving clarity and effectiveness of the interference indication. In addition, the first indication information and the second indication information are simultaneously indicated through the same piece of signaling, or the first indication information and the second indication information are separately indicated through different pieces of signaling. In this way, the indication of the first indication information and the second indication information is more flexible.

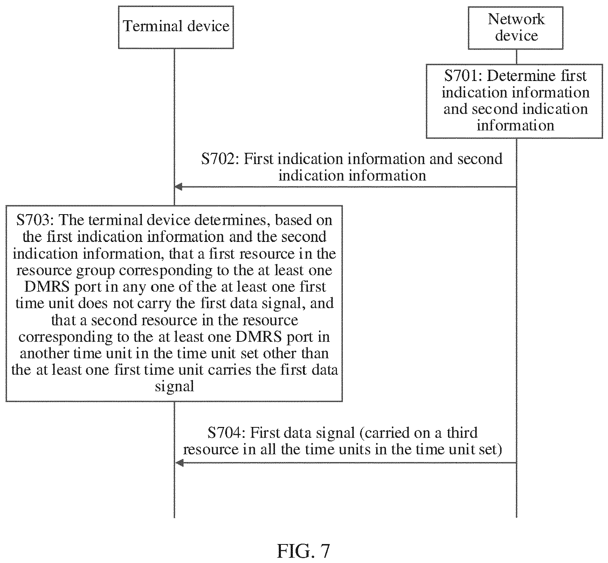

Further, refer to an interaction flowchart shown in FIG. 7. Based on FIG. 5, FIG. 7 describes a communication method in an embodiment of this application from a perspective of interaction between a terminal device and a network device.

Step 701: A network device determines first indication information and second indication information.

For the first indication information and the second indication information, refer to the descriptions of the first indication information and the second indication information in FIG. 5.

Step 702: The network device sends the first indication information and the second indication information to a terminal device, and the terminal device may receive the first indication information and the second indication information that are sent by the network device.

In a specific implementation, the first indication information and the second indication information may be sent at the same time, or may be sent successively. As described above, when the first indication information and the second indication information are carried in a same piece of signaling (for example, DCI), the first indication information and the second indication information may be sent at the same time; and when the first indication information and the second indication information are carried in different pieces of signaling, the first indication information and the second indication information may be sent successively. This is not limited in embodiments of this application.

Step 703: The terminal device determines, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal.

For implementation of the step 703, refer to the foregoing description of the step 503, and details are not described herein again.

Step 704: The network device sends the first data signal to the terminal device on a third resource in all the time units in the time unit set, and the terminal device may receive the first data signal from the network device on the third resource in all the time units in the time unit set.

As described above, the third resource includes the second resource and does not include the first resource.

For description of a specific embodiment of FIG. 7, refer to the embodiment of FIG. 5, and details are not described herein again.

In the embodiments corresponding to FIG. 5 and FIG. 7, the DMRS port corresponding to the interference signal in each time unit is indicated by a time domain location at which the DMRS is actually sent, that is, a specific feature of the interference signal is described by using each time unit as a dimension, so that the terminal device can accurately determine a specific status of the interference signal in each time unit, and can accurately demodulate the received first data signal, thereby improving effectiveness and reliability of data transmission.

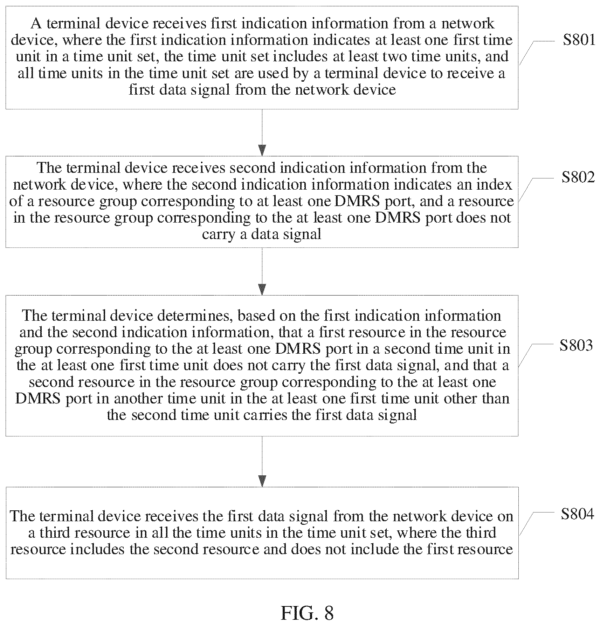

FIG. 8 is a flowchart of another communication method according to an embodiment of this application. For example, the communication method may be performed by a terminal device. The process shown in FIG. 8 is described as follows.

Step 801: A terminal device receives first indication information from a network device, where the first indication information indicates at least one first time unit in a time unit set, the time unit set includes at least two time units, and all time units in the time unit set are for a terminal device to receive a first data signal from the network device.

Implementation of the step 801 is similar to implementation of the step 501 in FIG. 5. Therefore, for description of the embodiment of the step 801, refer to the foregoing description of the step 501.

Step 802: The terminal device receives second indication information from the network device, where the second indication information indicates an index of a resource group corresponding to at least one DMRS port, and a resource in the resource group corresponding to the at least one DMRS port does not carry a data signal.

Implementation of the step 802 is similar to implementation of the step 502 in FIG. 5. Therefore, for description of the embodiment of the step 802, refer to the foregoing description of the step 502.

Step 803: The terminal device determines, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal.

The second time unit is a time unit in the at least one first time unit. The second time unit may include one first time unit, or may include a plurality of first time units. When the second time unit includes a plurality of first time units, the second time unit may include a plurality of first time units that are consecutive in the time domain, or may include a plurality of first time units that are inconsecutive in the time domain.

It may be understood that the at least one first time unit may include one second time unit, or may include a plurality of second time units. The first resource in the resource group corresponding to the at least one DMRS port in the second time unit does not carry the first data signal. It may be understood that the first resource in the resource group corresponding to the at least one DMRS port in the second time unit may carry a DMRS, for example, may carry a DMRS used to estimate a channel of data received by the terminal device, and may carry a DMRS used to estimate a stream of data (for example, an interference signal) received by another terminal device. That is, the terminal device may receive the DMRS on the frequency domain resource corresponding to the second time unit. The received DMRS may include a DMRS for channel estimation of the terminal device, and may further include a DMRS corresponding to an interference signal. In addition, as the terminal device generally needs to receive the DMRS used for channel estimation of the terminal device only once, the DMRS received on the frequency domain resource corresponding to the second time unit may be only the DMRS corresponding to the interference signal.

In this embodiment of this application, interference is indicated by using the second time unit as an indication granularity in all the first time units. In other words, each interference signal that may exist in the at least one time unit is indicated by using an interference signal as a dimension, and one second time unit may correspond to one interference signal.

In an implementation, the second time unit includes a time unit that is the first of the at least one first time unit. In this way, the DMRS may be pre-sent, that is, the DMRS is transmitted in a time unit in the front (namely, a first time unit) as much as possible in a plurality of scheduled slots, so that a data demodulation delay can be reduced as much as possible, and a network delay can be reduced.

Step 804: The terminal device receives the first data signal from the network device on a third resource in all the time units in the time unit set, where the third resource includes the second resource and does not include the first resource.

Implementation of the step 804 is similar to implementation of the step 504 in FIG. 5. Therefore, for description of the embodiment of the step 804, refer to the foregoing description of the step 504.

In a specific implementation, the first indication information may indicate at least one of the following information:
an index of the at least one first time unit in the time unit set; or
a time domain start location and a time domain end location of the at least one first time unit in the time unit set; or
a time domain start location and time domain duration of the at least one first time unit in the time unit set; or
a time domain end location and time domain duration of the at least one first time unit in the time unit set.

(1) An index of the at least one first time unit in the time unit set. Each time unit in the time unit set has an index. For example, indexes corresponding to four slots: slot0 to slot3, in FIG. 4 are respectively 0, 1, 2, and 3. Therefore, the network device may clearly indicate the index of the at least one first time unit to the terminal device. For example, if the indicated indexes of the at least one first time unit are 0 and 1, it indicates that both slot0 and slot1 in slot0 to slot3 are first time units in the time unit set.
(2) A time domain start location and a time domain end location of the at least one first time unit in the time unit set. For example, there are two first time units. Still as shown in FIG. 4, assuming that the two first time units are slot0 and slot1, the two first time units may be represented by the time domain start location and the time domain end location in the time unit set. For example, if the time domain start location is slot0, and the time domain end location is slot1, it indicates that one of the first time units is slot0, and the other of the first time units is slot1.
(3) A time domain start location and time domain duration of the at least one first time unit in the time unit set. For example, there are two first time units. Still as shown in FIG. 4, assuming that the two first time units are slot0 and slot1, correspondingly, the time domain start location is slot0, and the time domain duration is 2, that is, two time units starting from slot0. In another example, there are four first time units. Assuming that the four first time units are slot0 to slot3, the corresponding time domain start location is slot0, and the time domain duration is 4.
(4) A time domain end location and time domain duration of the at least one first time unit in the time unit set. For example, there are two first time units. Still as shown in FIG. 4, assuming that the two first time units are slot0 and slot], the corresponding time domain end location is slot1, and the time domain duration is 2, that is, all time units two time units before the time domain end location may be the at least one first time unit.

Refer to some possible interference cases corresponding to the first data signal scheduled in four consecutive slots shown in FIG. 6. For example, each interference case is referred to as an interference mode, and it can be seen that FIG. 6 shows seven possible interference modes, which are specifically shown in Table 3 below.

**Table 3**

| Index value | CDM group without data | DMRS port occupied by interference | Interference mode |
|---|---|---|---|
| 0 | 1 | 1001 | Interference 1: start from slot0 for duration of 2; |
| | | | Interference 2: start from slot2 for duration of 2. |
| 1 | 1 | 1001 | Interference 1: start from slot0 for duration of 2; |
| | | | Interference 2: start from slot2 for duration of 1. |
| 2 | 1 | 1001 | Interference 1: start from slot0 for duration of 2; |
| | | | Interference 2: start from slot3 for duration of 1. |
| 3 | 1 | 1001 | Interference 1: start from slot0 for duration of 1; |
| | | | Interference 2: start from slot2 for duration of 2. |
| 4 | 1 | 1001 | Interference 1: start from slot1 for duration of 1; |
| | | | Interference 2: start from slot2 for duration of 2. |
| 5 | 1 | 1001 | Interference 1: start from slot0 for duration of 4. |
| 6 | 1 | 1001 | Without interference |
| 7 | Reserved | Reserved | Reserved |

Based on the foregoing analysis, time units in the time unit set other than the first time unit may be referred to as other time units. In other words, the time unit set consists of the first time unit and other time units. The first time unit may indicate a DMRS port of an existing interference signal. In a specific implementation, the following cases may be included.

Case 1. All time units in the time unit set are the first time units, that is, there is an interference signal in each time unit in the time unit set. In this case, other time units are an empty set, as an interference mode 0 and an interference mode 5 shown in FIG. 6. In the interference mode 0, two interference signals are included, one interference signal occupies slots slot0 and slot1, and the other interference signal occupies slots slot2 and slot3. In the interference mode 5, one interference signal is included, and the interference signal occupies four consecutive slots.

Case 2. Some time units in the time unit set are the first time units, that is, there are interference signals only in some time units in the time unit set. In this case, other time units and the first time units are not empty sets, as an interference mode 1, an interference mode 2, an interference mode 3, and an interference mode 4 shown in the figure. Using the interference mode 2 as an example, two interference signals are included, one interference signal occupies slots slot0 and slot1, and the other interference signal occupies only slot3. It can be learned that there is no interference in slot2.

Case 3. The time unit set does not include the first time unit, that is, there is no interference in the time unit set. In this case, the first time unit is an empty set, and other time units are all time units in the time unit set, as an interference mode 6 in FIG. 6. In the interference mode 6 in FIG. 6, a dashed line indicates that there is no interference in a slot corresponding to the dashed line, that is, there is no interference in the entire slot set. This may correspond to an SU-MIMO service scenario.

In a specific implementation, the first indication information and the second indication information may be carried in a same field in the DCI, for example, both are carried in an antenna port field in the DCI, and different interference modes in Table 2 may be indicated by different values of the antenna port field. Alternatively, the first indication information and the second indication information may be carried in different fields in the DCI. For example, the second indication information is carried in the antenna port field in the DCI, and the first indication information is carried in another field in the DCI. Alternatively, the first indication information and the second indication information may be carried through different pieces of signaling. For example, the first indication information is carried through a MAC-CE, and the second indication information is carried through DCI. In this way, the existing signaling and some fields in the existing signaling are reused, so that a specific feature of each interference signal can be clearly indicated to the terminal device, thereby improving clarity and effectiveness of the interference indication.

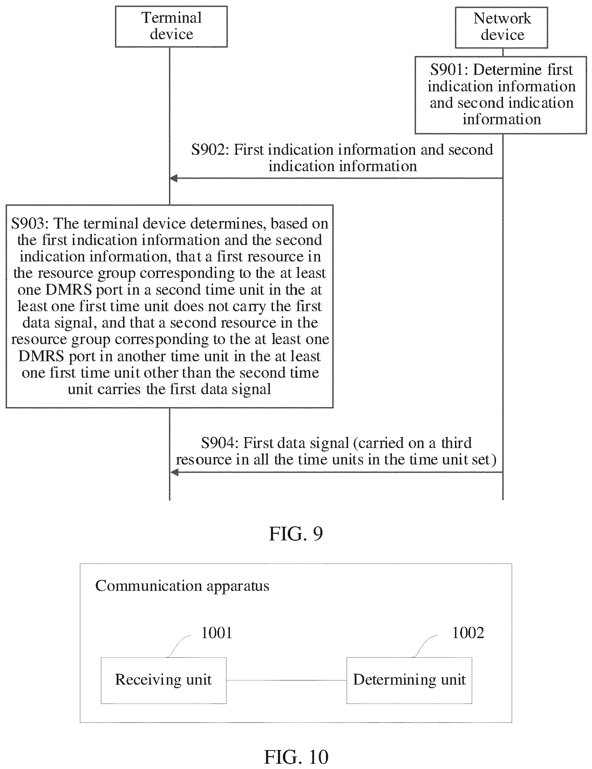

Further, refer to an interaction flowchart shown in FIG. 9. Based on FIG. 8, FIG. 9 describes a communication method in an embodiment of this application from a perspective of interaction between a terminal device and a network device.

Step 901: A network device determines first indication information and second indication information.

For the first indication information and the second indication information, refer to the descriptions of the first indication information and the second indication information in FIG. 8.

Step 902: The network device sends the first indication information and the second indication information to a terminal device, and the terminal device may receive the first indication information and the second indication information that are sent by the network device.

In a specific implementation, the first indication information and the second indication information may be sent at the same time, or may be sent successively. As described above, when the first indication information and the second indication information are carried in a same piece of signaling (for example, DCI), the first indication information and the second indication information may be sent at the same time; and when the first indication information and the second indication information are carried in different pieces of signaling, the first indication information and the second indication information may be sent successively. This is not limited in embodiments of this application.

Step 903: The terminal device determines, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal.

For implementation of the step 903, refer to the foregoing description of the step 803, and details are not described herein again.

Step 904: The network device sends the first data signal to the terminal device on a third resource in all the time units in the time unit set, and the terminal device may receive the first data signal from the network device on the third resource in all the time units in the time unit set.

As described above, the third resource includes the second resource and does not include the first resource.

For description of a specific embodiment of FIG. 9, refer to the embodiment of FIG. 8, and details are not described herein again.

In the embodiments corresponding to FIG. 8 and FIG. 9, the DMRS port corresponding to each interference signal and time domain location information are indicated, and a specific feature of each interference signal is described in a dimension of each interference signal, so that the terminal device can accurately determine a specific status of each interference signal, and can accurately demodulate the received first data signal, thereby improving effectiveness and reliability of data transmission.

FIG. 5 to FIG. 7 describe a solution for indicating an interference signal, and FIG. 8 and FIG. 9 describe another solution for indicating an interference signal. In FIG. 5 to FIG. 7, a specific feature of an interference signal in each time unit is indicated by using a time unit as a dimension. As described above, one interference signal may span a plurality of time units. In this case, a specific feature of a complete interference signal may be determined through indication information of the interference signal in a plurality of time units. In FIG. 8 and FIG. 9, a specific feature of each interference signal is indicated by using an interference signal as a dimension, and one interference signal may occupy only one time unit or may span a plurality of time units.

The technical solutions shown in FIG. 5 to FIG. 7 and FIG. 8 to FIG. 9 can implement clear indication of an interference signal. When there are a large quantity of total interference modes in a slot set (mainly depending on a DMRS configuration, a multi-user pairing status under the influence of channel conditions, and a downlink service complexity), compared with the solution in FIG. 5 to FIG. 7, fewer bits may need to be allocated in the solution in FIG. 8 and FIG. 9. When there are a small quantity of total interference modes, in the solution in FIG. 5 to FIG. 7, the method of allocating bits to each slot can reduce redundancy as much as possible. Therefore, the two solutions each have a suitable application condition. A specific solution to be used may be flexibly configured by a network device or manually. This is not limited in embodiments of this application.

Based on a same technical concept, an embodiment of this application provides a communication apparatus. The communication apparatus may be a terminal device or a chip disposed in the terminal device. The communication apparatus has a function of implementing the terminal device in the embodiments shown in FIG. 5 to FIG. 7. For example, the communication apparatus includes corresponding modules, units, or means (means) for performing the steps performed by the terminal device in the embodiments shown in FIG. 5 to FIG. 7. The functions, units, or means may be implemented by software, may be implemented by hardware, or may be implemented by hardware executing corresponding software. Refer to FIG. 10 for an example. A communication apparatus in an embodiment of this application includes a receiving unit 1001 and a determining unit 1002.

The receiving unit 1001 is configured to receive first indication information from a network device, where the first indication information indicates at least one first time unit in a time unit set, the time unit set includes at least two time units, and all time units in the time unit set are for a terminal device to receive a first data signal from the network device.

The receiving unit 1001 is further configured to receive second indication information from the network device, where the second indication information indicates an index of a resource group corresponding to at least one DMRS port, and a resource in the resource group corresponding to the at least one DMRS port does not carry a data signal.

The determining unit 1002 is configured to determine, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal.

The receiving unit 1001 is further configured to receive the first data signal from the network device on a third resource in all the time units in the time unit set, where the third resource includes the second resource and does not include the first resource.

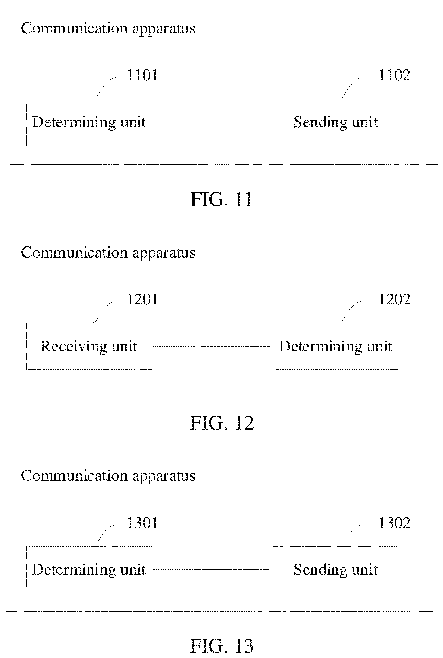

Based on a same inventive concept, an embodiment of this application provides a communication apparatus. The communication apparatus may be a network device or a chip disposed in the network device. The communication apparatus has a function of implementing the network device in the embodiments shown in FIG. 5 to FIG. 7. For example, the communication apparatus includes corresponding modules, units, or means (means) for performing the steps performed by the network device in the embodiments shown in FIG. 5 to FIG. 7. The functions, units, or means may be implemented by software, may be implemented by hardware, or may be implemented by hardware executing corresponding software. Refer to FIG. 11 for an example. A communication apparatus in an embodiment of this application includes a determining unit 1101 and a sending unit 1102.

The determining unit 1101 is configured to determine first indication information and second indication information, where the first indication information indicates at least one first time unit in a time unit set, the time unit set includes at least two time units, all time units in the time unit set are for a terminal device to receive a first data signal from a network device, the second indication information indicates an index of a resource group corresponding to at least one DMRS port, and a resource in the resource group corresponding to the at least one DMRS port does not carry a data signal.

The sending unit 1102 is configured to send the first indication information and the second indication information to the terminal device, where the first indication information and the second indication information are for the terminal device to determine that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal.

The sending unit 1102 is further configured to send the first data signal to the terminal device on a third resource in all the time units in the time unit set, where the third resource includes the second resource and does not include the first resource.

For the communication apparatuses shown in FIG. 10 and FIG. 11, in a possible implementation, the first indication information indicates an index, in a time unit set, of a time unit for sending a DMRS corresponding to at least one DMRS port in each first time unit, or time domain difference information between a time unit for sending a DMRS corresponding to at least one DMRS port in each first time unit and the first time unit.

Based on a same technical concept, an embodiment of this application provides a communication apparatus. The communication apparatus may be a terminal device or a chip disposed in the terminal device. The communication apparatus has a function of implementing the terminal device in the embodiments shown in FIG. 8 to FIG. 9. For example, the communication apparatus includes corresponding modules, units, or means (means) for performing the steps performed by the terminal device in the embodiments shown in FIG. 8 to FIG. 9. The functions, units, or means may be implemented by software, may be implemented by hardware, or may be implemented by hardware executing corresponding software. Refer to FIG. 12 for an example. A communication apparatus in an embodiment of this application includes a receiving unit 1201 and a determining unit 1202.

The receiving unit 1201 is configured to receive first indication information from a network device, where the first indication information indicates at least one first time unit in a time unit set, the time unit set includes at least two time units, and all time units in the time unit set are for a terminal device to receive a first data signal from the network device.

The receiving unit 1201 is further configured to receive second indication information from the network device, where the second indication information indicates an index of a resource group corresponding to at least one DMRS port, and a resource in the resource group corresponding to the at least one DMRS port does not carry a data signal.

The determining unit 1202 is configured to determine, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal.

The receiving unit 1201 is further configured to receive the first data signal from the network device on a third resource in all the time units in the time unit set, where the third resource includes the second resource and does not include the first resource.

Based on a same technical concept, an embodiment of this application provides a communication apparatus. The communication apparatus may be a network device or a chip disposed in the network device. The communication apparatus has a function of implementing the network device in the embodiments shown in FIG. 8 to FIG. 9. For example, the communication apparatus includes corresponding modules, units, or means (means) for performing the steps performed by the network device in the embodiments shown in FIG. 8 to FIG. 9. The functions, units, or means may be implemented by software, may be implemented by hardware, or may be implemented by hardware executing corresponding software. Refer to FIG. 13 for an example. A communication apparatus in an embodiment of this application includes a determining unit 1301 and a sending unit 1302.

The determining unit 1301 is configured to determine first indication information and second indication information, where the first indication information indicates at least one first time unit in a time unit set, the time unit set includes at least two time units, all time units in the time unit set are for a terminal device to receive a first data signal from a network device, the second indication information indicates an index of a resource group corresponding to at least one DMRS port, and a resource in the resource group corresponding to the at least one DMRS port does not carry a data signal.

The sending unit 1302 is configured to send the first indication information and the second indication information to the terminal device, where the first indication information and the second indication information are for the terminal device to determine that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal.

The sending unit 1302 is further configured to send the first data signal to the terminal device on a third resource in all the time units in the time unit set, where the third resource includes the second resource and does not include the first resource.

For the communication apparatuses shown in FIG. 12 and FIG. 13, in a possible implementation, the first indication information indicates:
an index of the at least one first time unit in the time unit set; or
a time domain start location and a time domain end location of the at least one first time unit in the time unit set; or
a time domain start location and time domain duration of the at least one first time unit in the time unit set; or
a time domain end location and time domain duration of the at least one first time unit in the time unit set.

In a possible implementation, the second time unit includes a time unit that is the first of the at least one first time unit.

For the communication apparatuses shown in FIG. 12 and FIG. 13, in a possible implementation, the second time unit includes a time unit that is the first of the at least one first time unit.

For the communication apparatuses shown in FIG. 10 to FIG. 13, in a possible implementation, the first indication information and the second indication information are carried in a same field of DCI; or the first indication information and the second indication information are carried in different fields of DCI; or the first indication information is carried in a MAC-CE, and the second indication information is carried in DCI.

For the communication apparatuses shown in FIG. 10 to FIG. 13, in a possible implementation, a time unit in the time unit set is a slot, and the first resource and the second resource are REs.

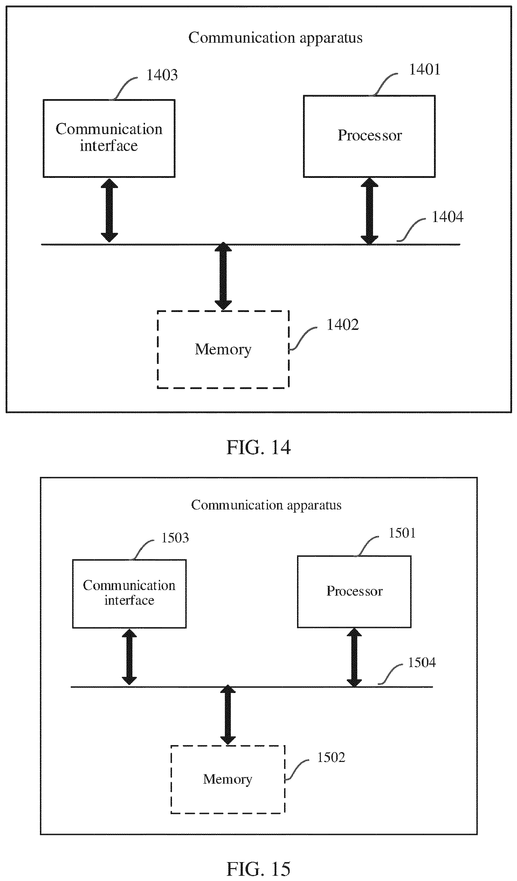

Based on a same technical concept, refer to FIG. 14. An embodiment of this application further provides a communication apparatus, including: at least one processor 1401, and a communication interface 1403 communicatively connected to the at least one processor 1401. The at least one processor 1401 executes instructions stored in a memory 1402, causing the communication apparatus to perform, through the communication interface 1403, the method steps performed by the terminal device in the embodiments shown in FIG. 5 to FIG. 7, or to perform the method steps performed by the terminal device in the embodiments shown in FIG. 8 and FIG. 9.

Optionally, the memory 1402 is located outside the communication apparatus.

Optionally, the communication apparatus includes the memory 1402, the memory 1402 is connected to the at least one processor 1401, and the memory 1402 stores instructions that can be executed by the at least one processor 1401. In FIG. 14, a dashed line indicates that the memory 1402 is optional for the communication apparatus.

The at least one processor 1401 and the memory 1402 may be coupled to each other by an interface circuit, or may be integrated together. This is not limited herein.

A specific connection medium among the processor 1401, the memory 1402, and the communication interface 1403 is not limited in embodiments of this application. In this embodiment of this application, the processor 1401, the memory 1402, and the communication interface 1403 are connected by a bus 1404 in FIG. 14. The bus is represented by a bold line in FIG. 14. A connection manner among other components is merely an example for description, and is not limited thereto. The bus may be classified into an address bus, a data bus, a control bus, and the like. For ease of representation, only one bold line represents the bus in FIG. 14, but this does not mean that there is only one bus or only one type of bus.

Based on a same technical concept, refer to FIG. 15. An embodiment of this application further provides a communication apparatus, including: at least one processor 1501, and a communication interface 1503 communicatively connected to the at least one processor 1501. The at least one processor 1501 executes instructions stored in a memory 1502, causing the communication apparatus to perform, through the communication interface 1503, the method steps performed by the network device in the embodiments shown in FIG. 5 to FIG. 7, or to perform the method steps performed by the network device in the embodiments shown in FIG. 8 and FIG. 9.

Optionally, the memory 1502 is located outside the communication apparatus.

Optionally, the communication apparatus includes the memory 1502, the memory 1502 is connected to the at least one processor 1501, and the memory 1502 stores instructions that can be executed by the at least one processor 1501. In FIG. 15, a dashed line indicates that the memory 1502 is optional for the communication apparatus.

The processor 1501 and the memory 1502 may be coupled to each other by an interface circuit, or may be integrated together. This is not limited herein.

A specific connection medium among the processor 1501, the memory 1502, and the communication interface 1503 is not limited in embodiments of this application. In this embodiment of this application, the processor 1501, the memory 1502, and the communication interface 1503 are connected by a bus 1504 in FIG. 15. The bus is represented by a bold line in FIG. 15. A connection manner among other components is merely an example for description, and is not limited thereto. The bus may be classified into an address bus, a data bus, a control bus, and the like. For ease of representation, only one bold line represents the bus in FIG. 15, but this does not mean that there is only one bus or only one type of bus.

It should be understood that the processor mentioned in embodiments of this application may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (programmable ROM, PROM), an erasable programmable read-only memory (Erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a communication system. The communication system includes the communication apparatus in FIG. 10 and the communication apparatus in FIG. 11, or includes the communication apparatus in FIG. 12 and the communication apparatus in FIG. 13, or includes the communication apparatus in FIG. 14 and the communication apparatus in FIG. 15.

Based on a same technical concept, an embodiment of this application further provides a computer-readable storage medium, including a program or instructions. When the program or the instructions are run on a computer, the method performed by the terminal device in the embodiments shown in FIG. 5 to FIG. 7 or the embodiments shown in FIG. 8 and FIG. 9 is performed.

Based on a same technical concept, an embodiment of this application further provides a computer-readable storage medium, including a program or instructions. When the program or the instructions are run on a computer, the method performed by the network device in the embodiments shown in FIG. 5 to FIG. 7 or the embodiments shown in FIG. 8 and FIG. 9 is performed.

Based on a same technical concept, an embodiment of this application further provides a chip. The chip is coupled to a memory, and is configured to read and execute program instructions stored in the memory, so that the method performed by the terminal device in the embodiments shown in FIG. 5 to FIG. 7 or the embodiments shown in FIG. 8 and FIG. 9 is performed.

Based on a same technical concept, an embodiment of this application further provides a chip. The chip is coupled to a memory, and is configured to read and execute program instructions stored in the memory, so that the method performed by the network device in the embodiments shown in FIG. 5 to FIG. 7 or the embodiments shown in FIG. 8 and FIG. 9 is performed.

Based on a same technical concept, an embodiment of this application further provides a computer program product, including instructions. When the instructions are run on a computer, the method performed by the terminal device in the embodiments shown in FIG. 5 to FIG. 7 or the embodiments shown in FIG. 8 and FIG. 9 is performed.

Based on a same technical concept, an embodiment of this application further provides a computer program product, including instructions. When the instructions are run on a computer, the method performed by the network device in the embodiments shown in FIG. 5 to FIG. 7 or the embodiments shown in FIG. 8 and FIG. 9 is performed.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of processes and/or blocks in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Clearly, a person skilled in the art can make various modifications and variations to embodiments of this application without departing from the spirit and scope of this application. This application is intended to cover these modifications and variations provided that they fall within the scope of protection defined by the following claims and their equivalent technologies.

## Claims

1. A communication method, comprising:
receiving first indication information from a network device, wherein the first indication information indicates at least one first time unit in a time unit set, the time unit set comprises at least two time units, and all time units in the time unit set are for a terminal device to receive a first data signal from the network device;
receiving second indication information from the network device, wherein the second indication information indicates an index of a resource group corresponding to at least one demodulation reference signal DMRS port, and a resource in the resource group corresponding to the at least one DMRS port does not carry a data signal;
determining, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal; and
receiving the first data signal from the network device on a third resource in all the time units in the time unit set, wherein the third resource comprises the second resource and does not comprise the first resource.

2. The method according to claim 1, wherein the first indication information indicates:
an index, in the time unit set, of a time unit for sending a DMRS corresponding to the at least one DMRS port in each first time unit; or
time domain difference information between a time unit for sending a DMRS corresponding to the at least one DMRS port in each first time unit and the first time unit.

3. A communication method, comprising:
receiving first indication information from a network device, wherein the first indication information indicates at least one first time unit in a time unit set, the time unit set comprises at least two time units, and all time units in the time unit set are used by a terminal device to receive a first data signal from the network device;
receiving second indication information from the network device, wherein the second indication information indicates an index of a resource group corresponding to at least one demodulation reference signal DMRS port, and a resource in the resource group corresponding to the at least one DMRS port does not carry a data signal;
determining, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal; and
receiving the first data signal from the network device on a third resource in all the time units in the time unit set, wherein the third resource comprises the second resource and does not comprise the first resource.

4. The method according to claim 3, wherein the first indication information indicates:
an index of the at least one first time unit in the time unit set; or
a time domain start location and a time domain end location of the at least one first time unit in the time unit set; or
a time domain start location and time domain duration of the at least one first time unit in the time unit set; or
a time domain end location and time domain duration of the at least one first time unit in the time unit set.

5. The method according to claim 3 or 4, wherein the second time unit comprises a time unit that is the first of the at least one first time unit.

6. A communication method, comprising:
determining first indication information and second indication information, wherein the first indication information indicates at least one first time unit in a time unit set, the time unit set comprises at least two time units, all time units in the time unit set are for a terminal device to receive a first data signal from a network device, the second indication information indicates an index of a resource group corresponding to at least one demodulation reference signal DMRS port, and a resource in the resource group corresponding to the at least one DMRS port does not carry a data signal;
sending the first indication information and the second indication information to the terminal device, wherein the first indication information and the second indication information are for the terminal device to determine that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal; and
sending the first data signal to the terminal device on a third resource in all the time units in the time unit set, wherein the third resource comprises the second resource and does not comprise the first resource.

7. The method according to claim 6, wherein the first indication information indicates:
an index, in the time unit set, of a time unit for sending a DMRS corresponding to the at least one DMRS port in each first time unit; or
time domain difference information between a time unit for sending a DMRS corresponding to the at least one DMRS port in each first time unit and the first time unit.

8. A communication method, comprising:
determining first indication information and second indication information, wherein the first indication information indicates at least one first time unit in a time unit set, the time unit set comprises at least two time units, all time units in the time unit set are for a terminal device to receive a first data signal from a network device, the second indication information indicates an index of a resource group corresponding to at least one demodulation reference signal DMRS port, and a resource in the resource group corresponding to the at least one DMRS port does not carry a data signal;
sending the first indication information and the second indication information to the terminal device, wherein the first indication information and the second indication information are for the terminal device to determine that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal; and
sending the first data signal to the terminal device on a third resource in all the time units in the time unit set, wherein the third resource comprises the second resource and does not comprise the first resource.

9. The method according to claim 8, wherein the first indication information indicates:
an index of the at least one first time unit in the time unit set; or
a time domain start location and a time domain end location of the at least one first time unit in the time unit set; or
a time domain start location and time domain duration of the at least one first time unit in the time unit set; or
a time domain end location and time domain duration of the at least one first time unit in the time unit set.

10. The method according to claim 8 or 9, wherein the second time unit comprises a time unit that is the first of the at least one first time unit.

11. The method according to any one of claims 1 to 10, wherein
the first indication information and the second indication information are carried in a same field of downlink control information DCI; or
the first indication information and the second indication information are carried in different fields of DCI; or
the first indication information is carried in a media access control-control element MAC-CE, and the second indication information is carried in DCI.

12. The method according to any one of claims 1 to 10, wherein a time unit in the time unit set is a slot slot, and the first resource and the second resource are resource elements RE.

13. A communication apparatus, comprising:
a receiving unit, configured to receive first indication information from a network device, wherein the first indication information indicates at least one first time unit in a time unit set, the time unit set comprises at least two time units, and all time units in the time unit set are used by a terminal device to receive a first data signal from the network device;
the receiving unit further configured to receive second indication information from the network device, wherein the second indication information indicates an index of a resource group corresponding to at least one demodulation reference signal DMRS port, and a resource in the resource group corresponding to the at least one DMRS port does not carry a data signal; and
a determining unit, configured to determine, based on the first indication information and the second indication information, that a first resource in the resource group corresponding to the at least one DMRS port in any one of the at least one first time unit does not carry the first data signal, and that a second resource in the resource group corresponding to the at least one DMRS port in another time unit in the time unit set other than the at least one first time unit carries the first data signal;
the receiving unit further configured to receive the first data signal from the network device on a third resource in all the time units in the time unit set, wherein the third resource comprises the second resource and does not comprise the first resource.

14. The apparatus according to claim 13, wherein the first indication information indicates:
an index, in the time unit set, of a time unit for sending a DMRS corresponding to the at least one DMRS port in each first time unit; or
time domain difference information between a time unit for sending a DMRS corresponding to the at least one DMRS port in each first time unit and the first time unit.

15. A communication apparatus, comprising:
a receiving unit, configured to receive first indication information from a network device, wherein the first indication information indicates at least one first time unit in a time unit set, the time unit set comprises at least two time units, and all time units in the time unit set are used by a terminal device to receive a first data signal from the network device;
the receiving unit further configured to receive second indication information from the network device, wherein the second indication information indicates an index of a resource group corresponding to at least one demodulation reference signal DMRS port, and a resource in the resource group corresponding to the at least one DMRS port does not carry a data signal; and
a determining unit, configured to determine, based on the first indication information and the second indication information, that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal;
the receiving unit further configured to receive the first data signal from the network device on a third resource in all the time units in the time unit set, wherein the third resource comprises the second resource and does not comprise the first resource.

16. The apparatus according to claim 15, wherein the first indication information indicates:
an index of the at least one first time unit in the time unit set; or
a time domain start location and a time domain end location of the at least one first time unit in the time unit set; or
a time domain start location and time domain duration of the at least one first time unit in the time unit set; or
a time domain end location and time domain duration of the at least one first time unit in the time unit set.

17. The apparatus according to claim 15 or 16, wherein the second time unit comprises a time unit that is the first of the at least one first time unit.

18. A communication apparatus, comprising:
a determining unit, configured to determine first indication information and second indication information, wherein the first indication information indicates at least one first time unit in a time unit set, the time unit set comprises at least two time units, all time units in the time unit set are used by a terminal device to receive a first data signal from a network device, the second indication information indicates an index of a resource group corresponding to at least one demodulation reference signal DMRS port, and a resource in the resource group corresponding to the at least one DMRS port does not carry a data signal; and
a sending unit, configured to send the first indication information and the second indication information to the terminal device, wherein the first indication information and the second indication information are used by the terminal device to determine that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal;
the sending unit further configured to send the first data signal to the terminal device on a third resource in all the time units in the time unit set, wherein the third resource comprises the second resource and does not comprise the first resource.

19. The apparatus according to claim 18, wherein the first indication information indicates:
an index, in the time unit set, of a time unit for sending a DMRS corresponding to the at least one DMRS port in each first time unit; or
time domain difference information between a time unit for sending a DMRS corresponding to the at least one DMRS port in each first time unit and the first time unit.

20. A communication apparatus, comprising:
a determining unit, configured to determine first indication information and second indication information, wherein the first indication information indicates at least one first time unit in a time unit set, the time unit set comprises at least two time units, all time units in the time unit set are used by a terminal device to receive a first data signal from a network device, the second indication information indicates an index of a resource group corresponding to at least one demodulation reference signal DMRS port, and a resource in the resource group corresponding to the at least one DMRS port does not carry a data signal; and
a sending unit, configured to send the first indication information and the second indication information to the terminal device, wherein the first indication information and the second indication information are used by the terminal device to determine that a first resource in the resource group corresponding to the at least one DMRS port in a second time unit in the at least one first time unit does not carry the first data signal, and that a second resource in the resource group corresponding to the at least one DMRS port in another time unit in the at least one first time unit other than the second time unit carries the first data signal;
the sending unit further configured to send the first data signal to the terminal device on a third resource in all the time units in the time unit set, wherein the third resource comprises the second resource and does not comprise the first resource.

21. The apparatus according to claim 20, wherein the first indication information indicates:
an index of the at least one first time unit in the time unit set; or
a time domain start location and a time domain end location of the at least one first time unit in the time unit set; or
a time domain start location and time domain duration of the at least one first time unit in the time unit set; or
a time domain end location and time domain duration of the at least one first time unit in the time unit set.

22. The apparatus according to claim 20 or 21, wherein the second time unit comprises a time unit that is the first of the at least one first time unit.

23. The apparatus according to any one of claims 13 to 22, wherein the first indication information and the second indication information are carried in a same field of downlink control information DCI; or
the first indication information and the second indication information are carried in different fields of DCI; or
the first indication information is carried in a media access control-control element MAC-CE, and the second indication information is carried in DCI.

24. The apparatus according to any one of claims 13 to 22, wherein a time unit in the time unit set is a slot slot, and the first resource and the second resource are resource elements RE.

25. A communication apparatus, comprising:
at least one processor, and a memory and a communication interface that are communicatively connected to the at least one processor, wherein
the memory stores instructions that are executable by the at least one processor, and the at least one processor executes the instructions stored in the memory, causing the apparatus to perform the method according to any one of claims 1 to 12.

26. A computer-readable storage medium, comprising a program or instructions, when the program or the instructions are run on a computer, the method according to any one of claims 1 to 12 being performed.
